(19) Europäisches Patentamt
European Patent Office
Office européen des brevets

(11) **EP 2 518 540 A1**

(12) **EUROPEAN PATENT APPLICATION**
published in accordance with Art. 153(4) EPC

(43) Date of publication:
**31.10.2012 Bulletin 2012/44**

(51) Int Cl.:
*G02B 5/30* (2006.01)    *C08F 2/00* (2006.01)
*G02B 5/26* (2006.01)    *G02F 1/1335* (2006.01)

(21) Application number: **10839288.7**

(22) Date of filing: **16.12.2010**

(86) International application number:
**PCT/JP2010/072664**

(87) International publication number:
**WO 2011/078055 (30.06.2011 Gazette 2011/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.12.2009 JP 2009291704
25.12.2009 JP 2009293790**

(71) Applicant: **Nitto Denko Corporation
Ibaraki-shi, Osaka 567-8680 (JP)**

(72) Inventors:
• **ASANOI, Yoshiaki
Ibaraki-shi
Osaka 567-8680 (JP)**
• **MURAKAMI, Nao
Ibaraki-shi
Osaka 567-8680 (JP)**
• **YOSHIMI, Hiroyuki
Ibaraki-shi
Osaka 567-8680 (JP)**

(74) Representative: **HOFFMANN EITLE
Patent- und Rechtsanwälte
Arabellastrasse 4
81925 München (DE)**

(54) **PROCESS FOR PRODUCTION OF BROAD-BAND CHOLESTERIC LIQUID CRYSTAL FILM**

(57) The production method for a broadband cholesteric liquid crystal film having a reflection bandwidth of 300 nm or more includes the steps of: applying a liquid crystal composition containing a polymerizable mesogenic compound (a), a polymerizable chiral agent (b), and a thermal polymerization initiator (c) onto an alignment base material; and providing a broadband characteristic to the liquid crystal composition through thermal polymerization, and has the following feature (i) or (ii). (i) The thermal polymerization initiator (c) is contained in the liquid crystal composition at a ratio of 0.2 to 4 parts by weight with respect to 100 parts by weight of a total of the polymerizable mesogenic compound (a) and the polymerizable chiral agent (b). (ii) The thermal polymerization is carried out at a heating temperature of 70 to 150°C under an inert gas atmosphere containing oxygen at an oxygen concentration of 5 vol% or less.

**Description**

Technical Field

The present invention relates to a production method for a broadband cholesteric liquid crystal film, and more specifically, to a production method for a broadband cholesteric liquid crystal film having a reflection bandwidth of 300 nm or more.

Background Art

Cholesteric liquid crystal having a circularly polarized light separation function has a selective reflection characteristic of reflecting only circularly polarized light whose circularly polarized direction is the same as a rotating direction of a helix of liquid crystal and whose wavelength corresponds to a helical pitch of the liquid crystal. Owing to this selective reflection characteristic, the cholesteric liquid crystal is used in a brightness enhancement film and a color filter.

However, the selective reflection characteristic of the cholesteric liquid crystal is exhibited in only a wavelength band within a specific range, and it is difficult for the selective reflection characteristic to be exhibited in a whole range of visible light.

The selective reflection wavelength bandwidth $\Delta\lambda$ of the cholesteric liquid crystal is represented by the following equation:

$$\Delta\lambda = 2\lambda \cdot (ne-no)/(ne+no)$$

where no represents a refractive index of a cholesteric liquid crystal molecule with respect to normal light,

ne represents a refractive index of a cholesteric liquid crystal molecule with respect to abnormal light, and

$\lambda$ represents a selective reflection central wavelength,

and the selective reflection wavelength bandwidth $\Delta\lambda$ depends on the molecular structure of the cholesteric liquid crystal per se.

In the above-mentioned equation, if "ne-no" is enlarged, the selective reflection wavelength bandwidth $\Delta\lambda$ can be widened, but "ne-no" is normally 0. 3 or less. When this value is enlarged, other functions (alignment characteristic, liquid crystal temperature, and the like) necessary for liquid crystal become insufficient, and hence it is difficult to use such liquid crystal in practice. Thus, in reality, the selective reflection wavelength bandwidth $\Delta\lambda$ is about 150 nm at most. As the cholesteric liquid crystal, currently, many kinds of liquid crystals can be practically used at a selective reflection wavelength bandwidth $\Delta\lambda$ of about 30 to 100 nm.

Further, the selective reflection central wavelength $\lambda$ is represented by the following equation:

$$\lambda = (ne+no)P/2$$

where P represents a helical pitch length necessary for a full rotation of a twist in the cholesteric liquid crystal, and the selective reflection central wavelength depends on an average refractive index of liquid crystal molecules and the pitch length if the pitch is constant.

Thus, in order for the selective reflection characteristic to be exhibited in the whole range of visible light, there have been proposed a method including laminating a plurality of layers having different selective reflection central wavelengths (see, for example, Patent Literatures 1 and 2), and a method including forming the existence distribution of selective reflection central wavelengths per se by continuously changing a pitch length in the thickness direction by carrying out ultraviolet polymerization under a special condition (see, for example, Patent Literature 3).

However, when the method including laminating a plurality of layers having different selective reflection central wavelengths is used, there occur problems of an increase in number of steps and a decrease in yield.

On the other hand, the method including forming existence distribution of selective reflection central wavelengths per se by continuously changing a pitch length in a thickness direction by carrying out ultraviolet polymerization under a special condition is a method, in which, when a cholesteric liquid crystal composition is cured by ultraviolet exposure, intensity of the exposure is differentiated in a light exposure surface side and a light exit surface side, thereby differentiating the rate of polymerization in both sides, and providing, in the thickness direction, a variation in the composition ratio of liquid crystal compositions having different reaction rates. However, this method arises a problem in that a production process of a film becomes complicated, because the production process, for example, requires ultraviolet irradiation for a long period of time, requires a main curing step for carrying out highly strong ultraviolet irradiation after the cholesteric liquid crystal composition is provided with a broadband characteristic under a state of semi-cure, and requires further heating at the time of curing by ultraviolet irradiation. Further, there occurs another problem in that ultraviolet irradiation causes yellowing in the resultant film, resulting in a deteriorated outer appearance of the film.

Citation List

Patent Literature

[PTL 1] JP 2004-212909 A
[PTL 2] JP 2004-258405 A
[PTL 3] JP 4133839 B2

Summary of Invention

Technical Problem

An object of the present invention is to provide a production method for a broadband cholesteric liquid crystal film having a reflection bandwidth of 300 nm or more, the method including simplified steps, and being capable of producing a broadband cholesteric liquid crystal film having a satisfactory outer appearance without yellowing.

Solution to Problem

A production method of the present invention is a production method for a broadband cholesteric liquid crystal film having a reflection bandwidth of 300 nm or more, the method including the steps of:

applying a liquid crystal composition containing a polymerizable mesogenic compound (a), a polymerizable chiral agent (b), and a thermal polymerization initiator (c) onto an alignment base material; and
providing a broadband characteristic to the liquid crystal composition through thermal polymerization,
in which the thermal polymerization initiator (c) is contained in the liquid crystal composition at a ratio of 0.2 to 4 parts by weight with respect to 100 parts by weight of a total of the polymerizable mesogenic compound (a) and the polymerizable chiral agent (b).

In a preferred embodiment, a pitch length in the broadband cholesteric liquid crystal film changes so as to narrow continuously from a side of the alignment base material.
A production method of the present invention is also a production method for a broadband cholesteric liquid crystal film having a reflection bandwidth of 300 nm or more, the method including the steps of:

applying a liquid crystal composition containing a polymerizable mesogenic compound (a), a polymerizable chiral agent (b), and a thermal polymerization initiator (c) onto an alignment base material; and
providing a broadband characteristic to the liquid crystal composition through thermal polymerization,
in which the thermal polymerization is carried out at a heating temperature of 70 to 150°C under an inert gas atmosphere containing oxygen at a concentration of 5 vol% or less.

In a preferred embodiment, a pitch length in the broadband cholesteric liquid crystal film changes so as to narrow continuously from a side of the alignment base material.

Advantageous Effects of Invention

According to the present invention, it is possible to provide the production method for a broadband cholesteric liquid crystal film having a reflection bandwidth of 300 nm or more, the method including simplified steps and being capable of producing a broadband cholesteric liquid crystal film having a satisfactory outer appearance without yellowing.

Description of Embodiments

A production method of the present invention is a production method for a broadband cholesteric liquid crystal film.

The broadband cholesteric liquid crystal film obtained by the production method of the present invention has a reflection bandwidth of 300 nm or more, and hence has a reflection bandwidth covering a very broad band. The broadband cholesteric liquid crystal film obtained by the production method of the present invention has a reflection bandwidth of preferably 350 nm or more, more preferably 400 to 800 nm.

The production method of the present invention includes the steps of: applying a liquid crystal composition containing a polymerizable mesogenic compound (a), a polymerizable chiral agent (b), and a thermal polymerization initiator (c) onto an alignment base material; and providing a broadband characteristic to the liquid crystal composition through thermal polymerization.

Any appropriate polymerizable mesogenic compound may be adopted as the polymerizable mesogenic compound (a). For example, there may be used any of the polymerizable mesogenic compounds described in JP 2002-533742 W (WO 00/37585), EP 358208 (US 5211877), EP 66137 (US 4388453), WO 93/22397, EP 0261712, DE 19504224, DE 4408171, GB 2280445, and the like. Specific examples of such polymerizable mesogenic compound include LC242 (trade name) manufactured by BASF Corporation, E7 (trade name) manufactured by Merck Ltd., and LC-Sillicon-CC3767 (trade name) manufactured by Wacker-Chem GMBH.

As the polymerizable mesogenic compound (a), there may be suitably used, for example, any of the liquid crystal monomers described in paragraphs 0035 to 0047 in JP 2003-287623 A. The polymerizable mesogenic compounds (a) may be used alone or in combination.

The content ratio of the polymerizable mesogenic compound (a) in the liquid crystal composition is preferably 75 to 98 wt%, more preferably 80 to 98 wt%, still more preferably 85 to 98 wt%. When the content ratio of the polymerizable mesogenic compound (a) in the liquid crystal composition is less than 75 wt%, the composition does not sufficiently exhibit a liquid crystal state, and consequently, cholesteric alignment is not sufficiently formed in some cases. When the content ratio of the polymerizable mesogenic compound (a) in the liquid crystal composition is more than 98 wt%, the content of the polymerizable chiral agent (b) becomes smaller, providing an insufficient twist, and consequently, cholesteric alignment is not sufficiently formed in some cases.

Any appropriate material that is capable of aligning the molecules of a liquid crystal material so as to form a desired cholesteric structure may be adopted as the polymerizable chiral agent (b). The twisting force of such chiral agent is, for example, preferably $1 \times 10^{-6}$ nm$^{-1}\cdot$ (wt%)$^{-1}$ or more, more preferably $1 \times 10^{-5}$ nm$^{-1}\cdot$ (wt%)$^{-1}$ to $1 \times 10^{-2}$ nm$^{-1}\cdot$ (wt%)$^{-1}$, most preferably $1 \times 10^{-4}$ nm$^{-1}\cdot$ (wt%)$^{-1}$ to $1 \times 10^{-3}$ nm$^{-1}\cdot$ (wt%)$^{-1}$. The use of a polymerizable chiral agent having such twisting force can control each helical pitch of a cholesteric alignment solidified layer structure in a desired range, and consequently, the selective reflection wavelength band of the resultant cholesteric liquid crystal can be controlled in a desired range.

As the polymerizable chiral agent (b), there may be suitably used, for example, any of the chiral agents described in paragraphs 0048 to 0056 in JP 2003-287623 A. The polymerizable chiral agents (b) may be used alone or in combination.

The content ratio of the polymerizable chiral agent (b) in the liquid crystal composition is preferably 1 to 20 wt%, more preferably 1.5 to 15 wt%, still more preferably 2 to 10 wt%. When the content ratio of the polymerizable chiral agent (b) in the liquid crystal composition is less than 1 wt%, an insufficient twist is provided, and consequently, cholesteric alignment is not sufficiently formed in some cases. When the content ratio of the polymerizable chiral agent (b) in the liquid crystal composition is more than 20 wt%, the temperature range in which a liquid crystal state is exhibited becomes very narrow.

Any appropriate thermal polymerization initiator may be adopted as the thermal polymerization initiator (c). Examples thereof include: azo-based compounds such as 2,2-azobisisobutyronitrile and 2,2-azobis(2,4-dimethylvaleronitrile); and organic peroxides including: diacyl peroxides such as benzoyl peroxide, lauroyl peroxide, and disuccinic acid peroxide; dialkyl peroxides such as di-t-butyl peroxide, t-butylcumyl peroxide, and dicumyl peroxide; peroxy esters such as t-butyl peroxyacetate, t-butyl peroxypivalate, t-butyl peroxybenzoate, and t-butyl maleic acid hemi-perester; hydroperoxides such as t-butyl hydroperoxide and cumene hydroperoxide; and ketone peroxides such as methyl ethyl ketone peroxide.

The content ratio of the thermal polymerization initiator (c) in the liquid crystal composition is preferably 0.2 to 4 parts by weight, more preferably 0.3 to 4 parts by weight, still more preferably 0.5 to 3.5 parts by weight, particularly preferably 0.5 to 3 parts by weight, with respect to 100 parts by weight of a total of the polymerizable mesogenic compound (a) and the polymerizable chiral agent (b). When the content ratio of the thermal polymerization initiator (c) is less than 0.2 part by weight with respect to 100 parts by weight of a total of the polymerizable mesogenic compound (a) and the polymerizable chiral agent (b), the production amount of radicals at the time of heating is insufficient, and hence curing may not progress. When the content ratio of the thermal polymerization initiator (c) is more than 4 parts by weight with respect to 100 parts by weight of a total of the polymerizable mesogenic compound (a) and the polymerizable chiral agent (b), the temperature range in which a liquid crystal state is exhibited becomes narrower, white turbidity is liable to occur, a curing rate becomes faster because of the increase of the production amount of radicals, and the diffusion of monomers necessary for providing a broadband characteristic may become insufficient.

In the production method of the present invention, a cholesteric liquid crystal is expressed by thermal polymerization, and hence it is not necessary to carry out polymerization by ultraviolet irradiation. Thus, the liquid crystal composition does not contain any photopolymerization initiator.

The liquid crystal composition may contain any appropriate additive as long as the effects of the present invention are impaired. Examples of the additive include an antioxidant, a modifier, a surfactant, a dye, a pigment, a discoloration inhibitor, and a UV absorber. Those additives may be used alone or in combination. More specifically, examples of the antioxidant include a phenol-based compound, an amine-based compound, an organic sulfur-based compound, and a phosphine-based compound. Examples of the modifier include glycols, silicones, and alcohols. The surfactant is added for smoothing the surface of an optical compensation layer, for example. Examples thereof include a silicone-based surfactant, an acrylic surfactant, and a fluorine-based surfactant.

In the production method of the present invention, the liquid crystal composition may be applied onto an alignment base material as it is, or may be applied onto an alignment base material after being dissolved or dispersed in a solvent. Examples of such solvent include: halogenated hydrocarbons such as chloroform, dichloromethane, carbon tetrachloride, dichloroethane, tetrachloroethane, methylene chloride, trichloroethylene, tetrachloroethylene, chlorobenzene, and orthodichlorobenzene; phenols such as phenol, p-chlorophenol, o-chlorophenol, m-cresol, o-cresol, and p-cresol; aromatic hydrocarbons such as benzene, toluene, xylene, methoxybenzene, and 1,2-dimethoxybenzene; ketone-based solvents such as acetone, methyl ethyl ketone (MEK), methyl isobutyl ketone, cyclohexanone, cyclopentanone, 2-pyrrolidone, and N-methyl-2-pyrrolidone; ester-based solvents such as ethyl acetate and butyl acetate; alcohol-based solvents such as t-butyl alcohol, glycerin, ethylene glycol, triethylene glycol, ethylene glycol monomethyl ether, diethylene glycol dimethyl ether, propylene glycol, dipropylene glycol, and 2-methyl-2,4-pentanediol; amide-based solvents such as dimethylformamide and dimethylacetamide; nitrile-based solvents such as acetonitrile and butyronitrole; ether-based solvents such as diethyl ether, dibutyl ether, tetrahydrofuran, and dioxane; and carbon disulfide, ethyl cellosolve, and butyl cellosolve. Those solvents may be used alone or in combination.

Any appropriate base material that can align the liquid crystal may be adopted as the alignment base material. Representative examples thereof include various plastic films. As a plastic, there are given, for example, triacetylcellulose (TAC), polyolefins such as polyethylene, polypropylene, and poly(4-methylpentene-1), polyimide, polyimide amide, polyether imide, polyamide, polyether ether ketone, polyether ketone, polyketone sulfide, polyether sulfone, polysulfone, polyphenylene sulfide, polyphenylene oxide, polyethylene terephthalate, polybutylene terephthalate, polyethylene naphthalate, polyacetal, polycarbonate, polyarylate, an acrylic resin, polyvinyl alcohol, polypropylene, cellulose-based plastics, an epoxy resin, and a phenol resin. There are also given stretched products of those plastics. Further, there are also given products obtained by disposing the plastic films or plastic sheets on surfaces of substrates made of metals such as aluminum, copper, and iron, substrates made of ceramics, substrates made of glasses, and the like. Further, there are also given products obtained by forming $SiO_2$ obliquely deposited films on surfaces of the base materials or the plastic films or plastic sheets. The thickness of the alignment base material is preferably 5 $\mu$m to 500 $\mu$m, more preferably 10 $\mu$m to 200 $\mu$m, most preferably 15 $\mu$m to 150 $\mu$m. When the alignment base material has such thickness, the alignment base material has enough strength as a base material, and hence it is possible to prevent the occurrence of, for example, the problem of its fracture at the time of producing a cholesteric liquid crystal film.

In the production method of the present invention, any appropriate application method can be adopted when the liquid crystal composition is applied onto the alignment base material. Examples thereof include a cast method.

The application thickness of the liquid crystal composition is preferably 3 to 20 $\mu$m, more preferably 3 to 15 $\mu$*m, still more preferably 3 to 10 $\mu$m, particularly preferably 4 to 10 $\mu$m, as the thickness of the resultant broadband cholesteric liquid crystal film. When the thickness is less than 3 $\mu$m, it may not be possible to form satisfactory helical pitches that are necessary for the resultant broadband cholesteric liquid crystal film to have a reflection bandwidth of 300 nm or more. When the thickness is more than 20 $\mu$m, an alignment regulating force is not sufficiently exerted, possibly causing defective alignment.

The production method of the present invention includes the step of providing a broadband characteristic to the liquid crystal composition through thermal polymerization.

The heating temperature at which the thermal polymerization is carried out is preferably 70 to 150°C, more preferably 80 to 140°C, still more preferably 80 to 130°C. When the heating temperature at which the thermal polymerization is carried out is less than 70°C, a smaller amount of radicals is produced by a thermal polymerization initiator, and hence curing may not progress. When the heating temperature at which the thermal polymerization is carried out is more than 150°C, the phase transition of the liquid crystal to an isotropic phase occurs and selective reflection may not be expressed.

The heating time in the thermal polymerization is preferably 2 minutes or more, more preferably 2 to 30 minutes, still more preferably 2 to 20 minutes. When the heating time in the thermal polymerization is less than 2 minutes, an insufficient amount of radicals may be produced by a thermal polymerization initiator. On the other hand, when the heating time in the thermal polymerization is too long, the production process becomes longer and may not be suitable for a roll-to-roll system.

The thermal polymerization is preferably carried out under an inert gas atmosphere containing oxygen at an oxygen concentration of 5 vol% or less. The oxygen concentration is more preferably 4 vol% or less, still more preferably 3 vol% or less, particularly preferably 2.5 vol% or less, most preferably 2 vol% or less. The lower limit of the oxygen concentration is preferably a value exceeding 0 vol%. When the oxygen concentration is more than 5 vol%, radicals produced by a thermal polymerization initiator are scavenged by oxygen, and consequently, curing may not progress. On the other hand, when the oxygen concentration is 0 vol%, oxygen inhibition does not occur at an air surface, and hence the difference of a reaction rate hardly occurs between at the air surface and at a base material surface. As a result, a broadband characteristic may not be provided.

Any appropriate inert gas may be adopted as the inert gas. Examples thereof include nitrogen, argon, helium, neon, xenon, and krypton. Of those, nitrogen is preferred because it is most versatile.

A pitch length in the broadband cholesteric liquid crystal film obtained by the production method of the present invention preferably changes so as to narrow continuously from the alignment base material side. The difference in pitch length in the alignment base material side and the opposite side is preferably at least 250 nm, more preferably at least 300 nm. Note that the pitch length can be read from cross-sectional TEM images of the broadband cholesteric liquid crystal film.

The broadband cholesteric liquid crystal film obtained by the production method of the present invention preferably has, as described above, a grandjean texture in which a pitch length changes so as to narrow continuously from one side. The broadband cholesteric liquid crystalfilm preferably has, continuously or discontinuously, in the longer pitch length side, a helical structure having a pitch length showing the reflection of light in the infrared range or a layer structure in which a helix almost disappears. In the broadband cholesteric liquid crystal film obtained by the production method of the present invention, the helical structure having a longer pitch length or the layer structure in which a helix almost disappears preferably serves as a retardation layer having a retardation value of 50 to 450 nm optically with respect to incident light from the front. As described above, the broadband cholesteric liquid crystal film obtained by the production method of the present invention preferably has a grandjean texture, has a part showing selective reflection in the visible range (380 to 780 nm) as a cholesteric liquid crystal, and has, in the longer pitch length side, a layer structure having a pitch completely different from the pitch in the part showing selective reflection. This layer structure can serve as a retardation layer as an optical characteristic. Its retardation value can be preferably controlled between 50 and 450 nm. For example, when the retardation value is 100 to 160 nm, light in the visible range passing through a cholesteric liquid crystal film can exhibit linear polarization. On the other hand, when the retardation value is 200 to 400 nm, the circularly polarized light that has passed through a cholesteric liquid crystal can be converted to circularly polarized light reversely rotating. As a result, it is possible to control freely the polarization state of transmitted light by adjusting the retardation value of the retardation layer in the broadband cholesteric liquid crystal film. Thus, the broadband cholesteric liquid crystal film obtained by the production method of the present invention can be used as a polarizing plate suitable for the mode of a liquid crystal display to be used.

Examples

Hereinafter, the present invention is specifically described based on examples, but the present invention is not limited by these examples. The evaluation methods in the examples are as described below. Further, "part(s)" and "%" in the examples are by weight unless otherwise specified.

<Measurement of reflection spectrum>

Each of the resultant cholesteric liquid crystal films had been transferred to glass to prepare a sample for measurement, and U-4100 manufactured by Hitachi High-Technologies Corporation was used to measure its reflection spectrum.

<Evaluation of yellowing>

U-4100 manufactured by Hitachi High-Technologies Corporation was used to measure YI values. When a cholesteric liquid crystal film showed a YI value of 1 or less, the film was determined to be free of yellowing.

<Adjustment of oxygen concentration in nitrogen gas>

The sensor part of an oxymeter was inserted into the aperture of a hermetically sealable container made of metal, and the oxygen concentration of the inside of the container was measured while nitrogen gas was being blown in. When the oxygen concentration was decreased to a desired one, the sensor was taken out, the blowing of nitrogen gas was stopped, and the aperture was closed.

[Example 1-1]

97.5 parts by weight of LC242 (manufactured by BASF Japan Ltd.) were used as a polymerizable mesogenic compound (a), 2.5 parts by weight of LC756 (manufactured by BASF Japan Ltd.) were used as a polymerizable chiral agent (b), and 0.5 part by weight of V-65 (manufactured by Wako Pure Chemical Industries, Ltd.) were used as a thermal polymerization initiator (c) to form a mixture, and a cyclopentanone solution containing the mixture (solid content of 30 wt%) was prepared.
The solution was casted on a stretched polyethylene terephthalate base material and was subjected to thermal polymerization at 100°C for 10 minutes under a nitrogen gas atmosphere containing oxygen at an oxygen concentration of 0.5 vol%, yielding a broadband cholesteric liquid crystal film (1-1).
Table 1 shows the results.

[Example 1-2]

A broadband cholesteric liquid crystal film (1-2) was obtained in the same manner as in Example 1-1 except that the content of the thermal polymerization initiator (c) was changed to 1.0 part by weight.
Table 1 shows the results.

[Example 1-3]

A broadband cholesteric liquid crystal film (1-3) was obtained in the same manner as in Example 1-1 except that the content of the thermal polymerization initiator (c) was changed to 2.0 parts by weight.
Table 1 shows the results.

[Example 1-4]

A broadband cholesteric liquid crystal film (1-4) was obtained in the same manner as in Example 1-1 except that the content of the thermal polymerization initiator (c) was changed to 3.0 parts by weight.
Table 1 shows the results.

[Comparative Example 1-1]

Abroadband cholesteric liquidcrystal film (C1-1) was obtained in the same manner as in Example 1-1 except that no thermal polymerization initiator (c) was used.
Table 2 shows the results.

[Comparative Example 1-2]

Abroadband cholesteric liquid crystal film (C1-2) was obtained in the same manner as in Example 1-1 except that the content of the thermal polymerization initiator (c) was changed to 0.1 part by weight.
Table 2 shows the results.

[Comparative Example 1-3]

A broadband cholesteric liquid crystal film (C1-3) was obtained in the same manner as in Example 1-1 except that the content of the thermal polymerization initiator (c) was changed to 5.0 parts by weight.
Table 2 shows the results.

[Comparative Example 1-4]

97.5 parts by weight of LC242 (manufactured by BASF Japan Ltd.) were used as a polymerizable mesogenic compound (a), 2.5 parts by weight of LC756 (manufactured by BASF Japan Ltd.) were used as a polymerizable chiral agent (b), and 5.0 parts by weight of IRGACURE 907 (manufactured by Ciba Japan K.K.) were used as a photopolymerization initiator to form a mixture, and a cyclopentanone solution containing the mixture (solid content of 30 wt%) was prepared.
The solution was casted on a stretched polyethylene terephthalate base material and was dried at 100°C for 2 minutes to remove the solvent. After that, the whole was irradiated, while being heated at 100°C, with ultraviolet rays at 6 mW/cm$^2$ for 5 minutes from the alignment base material side under a nitrogen gas atmosphere containing oxygen at an oxygen concentration of 21 vol%, yielding a broadband cholesteric liquid crystal film (C1-4).
Table 2 shows the results.

[Table 1]

|  |  | Example 1-1 | Example 1-2 | Example 1-3 | Example 1-4 |
|---|---|---|---|---|---|
| Liquid crystal composition (part(s) by weight) | Polymerizable mesogenic compound (a) | 97.5 | 97.5 | 97.5 | 97.5 |
|  | Polymerizable chiral agent (b) | 2.5 | 2.5 | 2.5 | 2.5 |
|  | Thermal polymerization initiator (c) | 0.5 | 1.0 | 2.0 | 3.0 |
|  | Photopolymerization initiator | 0 | 0 | 0 | 0 |
| Polymerization condition | Heating temperature (°C) | 100 | 100 | 100 | 100 |
|  | Oxygen concentration (vol%) | 0.5 | 0.5 | 0.5 | 0.5 |
|  | Ultraviolet intensity (mW/cm$^2$) | 0 | 0 | 0 | 0 |
| Evaluation | Reflection band (nm) | 780 to 1,150 | 710 to 1,180 | 730 to 1,180 | 700 to 1,190 |
|  | Reflection bandwidth (nm) | 370 | 470 | 450 | 490 |
|  | Yellowing | Absent | Absent | Absent | Absent |
| Pitch length (nm) | Alignment base material side | 0.71 | 0.73 | 0.73 | 0.73 |
|  | Opposite side | 0.52 | 0.47 | 0.49 | 0.47 |

[Table 2]

|  |  | Comparative Example 1-1 | Comparative Example 1-2 | Comparative Example 1-3 | Comparative Example 1-4 |
|---|---|---|---|---|---|
| Liquid crystal composition (part(s) by weight) | Polymerizable mesogenic compound (a) | 97.5 | 97.5 | 97.5 | 97.5 |
|  | Polymerizable chiral agent (b) | 2.5 | 2.5 | 2.5 | 2.5 |
|  | Thermal polymerization initiator (c) | 0 | 0.1 | 5.0 | 0 |
|  | Photopolymerization initiator | 0 | 0 | 0 | 5.0 |
| Polymerization condition | Heating temperature (°C) | 100 | 100 | 100 | 100 |
|  | Oxygen concentration (vol%) | 0.5 | 0.5 | 0 | 21 |
|  | Ultraviolet intensity (mW/cm$^2$) | 0 | 0 | 0 | 6 |

(continued)

| | | | Comparative Example 1-1 | Comparative Example 1-2 | Comparative Example 1-3 | Comparative Example 1-4 |
|---|---|---|---|---|---|---|
| Evaluation | Reflection band (nm) | | 950 to 1,060 | 880 to 1, 050 | 950 to 1,200 | 900 to 1,180 |
| | Reflection bandwidth (nm) | | 110 | 170 | 170 | 280 |
| | Yellowing | | Absent | Absent | Absent | Present |
| | Pitch length (nm) | Alignment base material side | 0.65 | 0.65 | 0.74 | 0.73 |
| | | Opposite side | 0.63 | 0.59 | 0.63 | 0.60 |

[Example 2-1]

97.5 parts by weight of LC242 (manufactured by BASF Japan Ltd.) were used as a polymerizable mesogenic compound (a), 2.5 parts by weight of LC756 (manufactured by BASF Japan Ltd.) were used as a polymerizable chiral agent (b), and 1.0 part by weight of V-65 (manufactured by Wako Pure Chemical Industries, Ltd.) were used as a thermal polymerization initiator (c) to form a mixture, and a cyclopentanone solution containing the mixture (solid content of 30 wt%) was prepared.
The solution was casted on a stretched polyethylene terephthalate base material and was subjected to thermal polymerization at 100 °C for 10 minutes under a nitrogen gas atmosphere containing oxygen at an oxygen concentration of 0.2 vol%, yielding a broadband cholesteric liquid crystal film (2-1).
Table 3 shows the results.

[Example 2-2]

A broadband cholesteric liquid crystal film (2-2) was obtained in the same manner as in Example 2-1 except that the oxygen concentration in nitrogen gas was changed to 0.5 vol%.
Table 3 shows the results.

[Example 2-3]

A broadband cholesteric liquid crystal film (2-3) was obtained in the same manner as in Example 2-1 except that the oxygen concentration in nitrogen gas was changed to 1.0 vol%.
Table 3 shows the results.

[Example 2-4]

A broadband cholesteric liquid crystal film (2-4) was obtained in the same manner as in Example 2-1 except that the oxygen concentration in nitrogen gas was changed to 0 vol%.
Table 3 shows the results.

[Example 2-5]

A broadband cholesteric liquid crystal film (2-5) was obtained in the same manner as in Example 2-1 except that the oxygen concentration in nitrogen gas was changed to 3.0 vol%.
Table 3 shows the results.

[Example 2-6]

A broadband cholesteric liquid crystal film (2-6) was obtained in the same manner as in Example 2-3 except that the polymerization temperature was changed to 80°C.
Table 4 shows the results.

[Example 2-7]

Abroadband cholesteric liquid crystal film (2-7) was obtained in the same manner as in Example 2-3 except that the polymerization temperature was changed to 120°C.
Table 4 shows the results.

[Example 2-8]

A broadband cholesteric liquid crystal film (2-8) was obtained in the same manner as in Example 2-5 except that the polymerization temperature was changed to 80°C.
Table 4 shows the results.

[Example 2-9]

Abroadband cholesteric liquid crystal film (2-9) was obtained in the same manner as in Example 2-5 except that the polymerization temperature was changed to 120°C.
Table 4 shows the results.

[Comparative Example 2-1]

A broadband cholesteric liquid crystal film (C2-1) was obtained in the same manner as in Example 2-1 except that the oxygen concentration in nitrogen gas was changed to 7.0 vol%.
Table 5 shows the results.

[Comparative Example 2-2]

Abroadband cholesteric liquid crystal film (C2-2) was obtained in the same manner as in Example 2-1 except that the oxygen concentration in nitrogen gas was changed to 10 vol%.
Table 5 shows the results.

[Comparative Example 2-3]

Abroadband cholesteric liquid crystal film (C2-3) was obtained in the same manner as in Example 2-1 except that the oxygen concentration in nitrogen gas was changed to 21 vol%.
Table 5 shows the results.

[Comparative Example 2-4]

Abroadband cholesteric liquid crystal film (C2-4) was obtained in the same manner as in Example 2-3 except that the polymerization temperature was changed to 50°C.
Table 5 shows the results.

[Comparative Example 2-5]

Abroadband cholesteric liquid crystal film (C2-5) was obtained in the same manner as in Example 2-3 except that the polymerization temperature was changed to 160°C.
Table 5 shows the results.

[Comparative Example 2-6]

Abroadband cholesteric liquid crystal film (C2-6) was obtained in the same manner as in Example 2-5 except that the polymerization temperature was changed to 50°C.
Table 5 shows the results.

[Comparative Example 2-7]

A broadband cholesteric liquid crystal film (C2-7) was obtained in the same manner as in Example 2-5 except that the polymerization temperature was changed to 160°C.

Table 6 shows the results.

[Comparative Example 2-8]

A broadband cholesteric liquid crystal film (C2-8) was obtained in the same manner as in Example 2-4 except that the polymerization temperature was changed to 50°C.
Table 6 shows the results.

[Comparative Example 2-9]

A broadband cholesteric liquid crystal film (C2-9) was obtained in the same manner as in Example 2-4 except that the polymerization temperature was changed to 160°C.
Table 6 shows the results.

[Comparative Example 2-10]

A broadband cholesteric liquid crystal film (C2-10) was obtained in the same manner as in Example 2-1 except that the oxygen concentration in nitrogen gas was changed to 10 vol% and the polymerization temperature was changed to 160°C.
Table 6 shows the results.

[Comparative Example 2-11]

97. 5 parts by weight of LC242 (manufactured by BASF Japan Ltd.) were used as a polymerizable mesogenic compound (a), 2.5 parts by weight of LC756 (manufactured by BASF Japan Ltd.) were used as a polymerizable chiral agent (b), and 5.0 parts by weight of IRGACURE 907 (manufactured by Ciba Japan K.K.) were used as a photopolymerization initiator to form a mixture, and a cyclopentanone solution containing the mixture (solid content of 30 wt%) was prepared.
The solution was casted on a stretched polyethylene terephthalate base material and was dried at 100°C for 2 minutes to remove the solvent. After that, the whole was irradiated, while being heated at 100°C, with ultraviolet rays at 6 mW/cm$^2$ for 5 minutes from the alignment base material side under a nitrogen gas atmosphere containing oxygen at an oxygen concentration of 21 vol%, yielding a broadband cholesteric liquid crystal film (C2-11).
Table 6 shows the results.
[Table 3]

| | | Example 2-1 | Example 2-2 | Example 2-3 | Example 2-4 | Example 2-5 |
|---|---|---|---|---|---|---|
| Liquid crystal composition (part(s) by weight) | Polymerizable mesogenic compound (a) | 97.5 | 97.5 | 97.5 | 97.5 | 97.5 |
| | Polymerizable chiral agent (b) | 2.5 | 2.5 | 2.5 | 2.5 | 2.5 |
| | Thermal polymerization initiator (c) | 1.0 | 1.0 | 1.0 | 1.0 | 1.0 |
| | Photopolymerization initiator | 0 | 0 | 0 | 0 | 0 |
| Polymerization condition | Heating temperature (°C) | 100 | 100 | 100 | 100 | 100 |
| | Oxygen concentration (vol%) | 0.2 | 0.5 | 1.0 | 0 | 3.0 |
| | Ultraviolet intensity (mW/cm$^2$) | 0 | 0 | 0 | 0 | 0 |

(continued)

| | | Example 2-1 | Example 2-2 | Example 2-3 | Example 2-4 | Example 2-5 |
|---|---|---|---|---|---|---|
| Evaluation | Reflection band (nm) | 740 to 1,140 | 710 to 1,180 | 740 to 1,160 | 700 to 1,100 | 790 to 1,130 |
| | Reflection bandwidth (nm) | 400 | 470 | 420 | 400 | 340 |
| | Yellowing | Absent | Absent | Absent | Absent | Absent |
| Pitch length (nm) | Alignment base material side | 0.70 | 0.73 | 0.72 | 0.68 | 0.70 |
| | Opposite side | 0.49 | 0.47 | 0.49 | 0.47 | 0.53 |

[Table 4]

| | | Example 2-6 | Example 2-7 | Example 2-8 | Example 2-9 |
|---|---|---|---|---|---|
| Liquid crystal composition (part(s) by weight) | Polymerizable mesogenic compound (a) | 97.5 | 97.5 | 97.5 | 97.5 |
| | Polymerizable chiral agent (b) | 2.5 | 2.5 | 2.5 | 2.5 |
| | Thermal polymerization initiator (c) | 1.0 | 1.0 | 1.0 | 1.0 |
| | Photopolymerization initiator | 0 | 0 | 0 | 0 |
| Polymerization condition | Heating temperature (°C) | 80 | 120 | 80 | 120 |
| | Oxygen concentration (vol%) | 1.0 | 1.0 | 3.0 | 3.0 |
| | Ultraviolet intensity (mW/cm$^2$) | 0 | 0 | 0 | 0 |
| Evaluation | Reflection band (nm) | 760 to 1,140 | 700 to 1,180 | 810 to 1,130 | 790 to 1,150 |
| | Reflection bandwidth (nm) | 380 | 480 | 320 | 360 |
| | Yellowing | Absent | Absent | Absent | Absent |
| Pitch length (nm) | Alignment base material side | 0.70 | 0.73 | 0.70 | 0.71 |
| | Opposite side | 0.51 | 0.47 | 0.54 | 0.53 |

[Table 5]

| | | Comparative Example 2-1 | Comparative Example 2-2 | Comparative Example 2-3 | Comparative Example 2-4 | Comparative Example 2-5 | Comparative Example 2-6 |
|---|---|---|---|---|---|---|---|
| Liquid crystal composition (part (s) by weight) | Polymerizable mesogenic compound (a) | 97.5 | 97.5 | 97.5 | 97.5 | 97.5 | 97.5 |
| | Polymerizable chiral agent (b) | 2.5 | 2.5 | 2.5 | 2.5 | 2.5 | 2.5 |
| | Thermal polymerization initiator (c) | 1.0 | 1.0 | 1.0 | 1.0 | 1.0 | 1.0 |
| | Photopolymerization initiator | 0 | 0 | 0 | 0 | 0 | 0 |
| Polymerization condition | Heating temperature (°C) | 100 | 100 | 100 | 50 | 160 | 50 |
| | Oxygen concentration (vol%) | 7.0 | 10 | 21 | 1.0 | 1.0 | 3.0 |
| | Ultraviolet intensity (mw/cm$^2$) | 0 | 0 | 0 | 0 | 0 | 0 |
| Evaluation | Reflection band (nm) | 940 to 1,080 | 950 to 1,070 | 950 to 1,070 | No reflection | No reflection | No reflection |
| | Reflection bandwidth (nm) | 140 | 140 | 140 | - | - | - |
| | Yellowing | Absent | Absent | Absent | - | - | - |
| Pitch length (nm) | Alignment base material side | 0.67 | 0.67 | 0.67 | - | - | - |
| | Opposite side | 0.63 | 0.63 | 0.63 | - | - | - |

EP 2 518 540 A1

13

[Table 6]

| | | Comparative Example 2-7 | Comparative Example 2-8 | Comparative Example 2-9 | Comparative Example 2-10 | Comparative Example 2-11 |
|---|---|---|---|---|---|---|
| Liquid crystal composition (part(s) by weight) | Polymerizable mesogenic compound (a) | 97.5 | 97.5 | 97.5 | 97.5 | 97.5 |
| | Polymerizable chiral agent (b) | 2.5 | 2.5 | 2.5 | 2.5 | 2.5 |
| | Thermal polymerization initiator (c) | 1.0 | 1.0 | 1.0 | 1.0 | 0 |
| | Photopolymerization initiator | 0 | 0 | 0 | 0 | 5.0 |
| Polymerization condition | Heating temperature (°C) | 160 | 50 | 160 | 160 | 100 |
| | Oxygen concentration (vol%) | 3.0 | 0 | 0 | 10 | 21 |
| | Ultraviolet intensity (mW/cm$^2$) | 0 | 0 | 0 | 0 | 6 |
| Evaluation | Reflection band (nm) | No reflection | No reflection | No reflection | No reflection | 900 to 1,180 |
| | Reflection bandwidth (nm) | - | - | - | - | 280 |
| | Yellowing | - | - | - | - | Present |
| | Pitch length (nm) / Alignment base material side | - | - | - | - | 0.73 |
| | Opposite side | - | - | - | - | 0.60 |

EP 2 518 540 A1

Industrial Applicability

The broadband cholesteric liquid crystal film obtained by the production method of the present invention is suitably used for an IR filter, a band-pass filter, a UV reflective film, a brightness enhancement film, a light control film, a retardation plate, a notch filter, and the like.

**Claims**

1. A production method for a broadband cholesteric liquid crystal film having a reflection bandwidth of 300 nm or more, the method comprising the steps of:

   applying a liquid crystal composition containing a polymerizable mesogenic compound (a), a polymerizable chiral agent (b), and a thermal polymerization initiator (c) onto an alignment base material; and
   providing a broadband characteristic to the liquid crystal composition through thermal polymerization,
   wherein the thermal polymerization initiator (c) is contained in the liquid crystal composition at a ratio of 0.2 to 4 parts by weight with respect to 100 parts by weight of a total of the polymerizable mesogenic compound (a) and the polymerizable chiral agent (b).

2. A production method according to claim 1, wherein a pitch length in the broadband cholesteric liquid crystal film changes so as to narrow continuously from a side of the alignment base material.

3. A production method for a broadband cholesteric liquid crystal film having a reflection bandwidth of 300 nm or more, the method comprising the steps of:

   applying a liquid crystal composition containing a polymerizable mesogenic compound (a), a polymerizable chiral agent (b), and a thermal polymerization initiator (c) onto an alignment base material; and
   providing a broadband characteristic to the liquid crystal composition through thermal polymerization,
   wherein the thermal polymerization is carried out at a heating temperature of 70 to 150°C under an inert gas atmosphere containing oxygen at a concentration of 5 vol% or less.

4. A production method according to claim 3, wherein a pitch length in the broadband cholesteric liquid crystal film changes so as to narrow continuously from a side of the alignment base material.

| | INTERNATIONAL SEARCH REPORT | International application No. |
|---|---|---|
| | | PCT/JP2010/072664 |

A. CLASSIFICATION OF SUBJECT MATTER
*G02B5/30*(2006.01)i, *C08F2/00*(2006.01)i, *G02B5/26*(2006.01)i, *G02F1/1335* (2006.01)i

According to International Patent Classification (IPC) or to both national classification and IPC

B. FIELDS SEARCHED

Minimum documentation searched (classification system followed by classification symbols)
G02B5/30, C08F2/00, G02B5/26, G02F1/1335

Documentation searched other than minimum documentation to the extent that such documents are included in the fields searched
Jitsuyo Shinan Koho        1922-1996   Jitsuyo Shinan Toroku Koho   1996-2011
Kokai Jitsuyo Shinan Koho   1971-2011   Toroku Jitsuyo Shinan Koho   1994-2011

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2004-182702 A  (Nitto Denko Corp.),<br>02 July 2004 (02.07.2004),<br>(Family: none) | 1-4 |
| Y | JP 2009-283246 A  (Dainippon Printing Co., Ltd.),<br>03 December 2009 (03.12.2009),<br>paragraphs [0071] to [0089]<br>(Family: none) | 1-4 |
| Y | JP 2004-212911 A  (Nitto Denko Corp.),<br>29 July 2004 (29.07.2004),<br>paragraph [0106]<br>(Family: none) | 3,4 |

☐  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 15 March, 2011 (15.03.11) | 22 March, 2011 (22.03.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004212909 A
- JP 2004258405 A
- JP 4133839 B
- JP 2002533742 W
- WO 0037585 A
- EP 358208 A
- US 5211877 A
- EP 66137 A
- US 4388453 A
- WO 9322397 A
- EP 0261712 A
- DE 19504224
- DE 4408171
- GB 2280445 A
- JP 2003287623 A